# EUROPEAN PATENT APPLICATION

(11) **EP 3 674 748 A1**
(43) Date of publication of application: **01.07.2020**
(21) Application number: 19208834.2
(22) Date of filing: 13.11.2019
(51) Int. Cl.: G01S 13/88, G01S 13/00, G01S 13/89, H01Q 21/08

(54) **MILLIMETER WAVE SECURITY CHECK GATE**

(30) Priority: 28.12.2018 CN 201811629832
(71) Applicant: Nuctech Company Limited, Beijing 100084 (CN)
(72) Inventor: ZHAO, Ziran, Haidian District, Beijing 100084 (CN); ZHENG, Zhimin, Haidian District, Beijing 100084 (CN); QIAO, Lingbo, Haidian District, Beijing 100084 (CN); JIN, Yingkang, Haidian District, Beijing 100084 (CN); LIU, Wenguo, Haidian District, Beijing 100084 (CN)
(74) Representative: Boult Wade Tennant LLP

(57) **Abstract**

A millimeter wave security check gate is provided, comprising: a gate body (1); and a top millimeter wave imaging system (2), comprising: a millimeter wave transceiving antenna array disposed at a top of the gate body (1), wherein the millimeter wave transceiving antenna array comprises at least one transmitting antenna unit (23) and a plurality of receiving antenna units (24); and a millimeter wave signal source (21) connected with the millimeter wave transceiving antenna array. Through adding the top millimeter wave imaging system at the top of the gate body, the millimeter wave security check gate may be able to irradiate the top of the object to be detected, thereby enhancing a detection for concealed contrabands in the top of the object to be detected.

## Description

### TECHNICAL FIELD

Embodiments of the present disclosure relate to a security check device, and particularly, to a millimeter wave security check gate for human body security check.

### BACKGROUND

The existing millimeter wave security check gates usually utilize a millimeter wave imaging system, for example, a cylindrical line scanning millimeter wave imaging system from L3 and CCT Technology, a planar line scanning millimeter wave imaging system from Nuctech and Simlmage, and a planar area array scanning millimeter wave imaging system from Rohde & Schwarz. However, the existing millimeter wave security check gates only image the front and back of a human body through a scanning of a plane or a cylindrical surface, while are not able to image a top of an object to be detected, and thus not able to detect contrabands in headscarf, hair, etc.

### SUMMARY

The present disclosure aims to address at least one aspect of the above problems and deficiencies existing in the prior art.

According to embodiments of the present disclosure, a millimeter wave security check gate may be provided, comprising:
a gate body; and
a top millimeter wave imaging system, comprising:
a millimeter wave transceiving antenna array disposed at a top of the gate body, wherein the millimeter wave transceiving antenna array comprises at least one transmitting antenna unit and a plurality of receiving antenna units; and
a millimeter wave signal source connected with the millimeter wave transceiving antenna array.

In some embodiments, the top millimeter wave imaging system further comprises:
a beam splitter configured to split a millimeter wave signal emitted by the millimeter wave signal source into a first millimeter wave signal and a second millimeter wave signal, wherein the first millimeter wave signal irradiates a top of an object to be detected within the gate body through the at least one transmitting antenna unit; and
a demodulator configured to receive the second millimeter wave signal from the beam splitter as a reference signal and receive second millimeter wave signals that are reflected by the top of the object to be detected and received by the plurality of receiving antenna units as measurement signals, and then demodulate the measurement signals.

In some embodiments, the demodulator is a multi-channel demodulator, and the multi-channel demodulator simultaneously receives the second millimeter wave signals that are reflected by the top of the object to be detected and received by the plurality of receiving antenna units as the measurement signals, and then demodulates the measurement signals.

In some embodiments, the millimeter wave signal source emits a millimeter wave signal through the at least one transmitting antenna unit, and the millimeter wave signal is to irradiate a top of an object to be detected within the gate body; and the top millimeter wave imaging system further comprises a multi-channel analog-to-digital converter to simultaneously receive millimeter wave signals that are reflected by the top of the object to be detected and received by the plurality of receiving antenna units, and to perform an analog-to-digital conversion to obtain strength information of the millimeter wave signals.

In some embodiments, a number of the at least one transmitting antenna unit is one, and the transmitting antenna unit is at a center of a rectangular imaging visual field of the top millimeter wave imaging system.

In some embodiments, the plurality of receiving antenna units are arranged along an edge of the rectangular imaging visual field.

In some embodiments, the plurality of receiving antenna units are arranged in a two-dimensional grid within the rectangular imaging visual field.

In some embodiments, the plurality of receiving antenna units are arranged randomly within the rectangular imaging visual field.

In some embodiments, a number of the at least one transmitting antenna unit is more than one, and the top millimeter wave imaging system further comprises a switch configured to switch the plurality of transmitting antenna units such that only one of the plurality of transmitting antenna units emits a millimeter wave at any time.

In some embodiments, the plurality of transmitting antenna units are arranged along two parallel edges of a rectangular imaging visual field of the top millimeter wave imaging system, and the plurality of receiving antenna units are arranged along another two parallel edges of the rectangular imaging visual field of the top millimeter wave imaging system.

Through disposing a top millimeter wave imaging system at the top of the gate body, the millimeter wave security check gate according to the above various embodiments of the present disclosure may be able to increase an irradiation angle of view on the top of the object to be detected, thereby enhancing a detection for concealed contrabands in the top of the object to be detected, and achieving an all-dimensional detection.

### BRIEF DESCRIPTION OF THE DRAWINGS

Fig. 1 shows a perspective view of a millimeter wave security check gate in accordance with one embodiment of the present disclosure;
Fig. 2 shows a schematic diagram of a top millimeter wave imaging system in accordance with one exemplary embodiment of the present disclosure;
Fig. 3 shows a schematic diagram of a top millimeter wave imaging system in accordance with another exemplary embodiment of the present disclosure;
Fig. 4 shows a schematic diagram of a top millimeter wave imaging system in accordance with yet another exemplary embodiment of the present disclosure;
Fig. 5 shows arrangements of transmitting antenna units and receiving antenna units of a top millimeter wave imaging system in accordance with the present disclosure.

### DETAILED DESCRIPTION

Although the present disclosure will be fully described with reference to the accompanying drawings with preferred embodiments of the present disclosure, it should be understood that those skilled in the art may modify the disclosure described herein while achieving the technical effects of the present disclosure. Therefore, it is understood that the above description is broadly disclosed for those skilled in the art, and is not intended to limit the exemplary embodiments described herein.

In addition, in the following detailed description, for ease of explanation, numerous specific details are set forth to provide a thorough understanding of embodiments of the present disclosure. However, it is clear that one or more of the embodiments may be practiced without these specific details. In other instances, well-known structures and devices are illustrated graphically to simplify the accompanying drawings.

According to a general inventive concept of the present disclosure, a millimeter wave security check gate may be provided, comprising: a gate body; and a top millimeter wave imaging system, comprising: a millimeter wave transceiving antenna array disposed at a top of the gate body, wherein the millimeter wave transceiving antenna array comprises at least one transmitting antenna unit and a plurality of receiving antenna units; and a millimeter wave signal source connected with the millimeter wave transceiving antenna array.

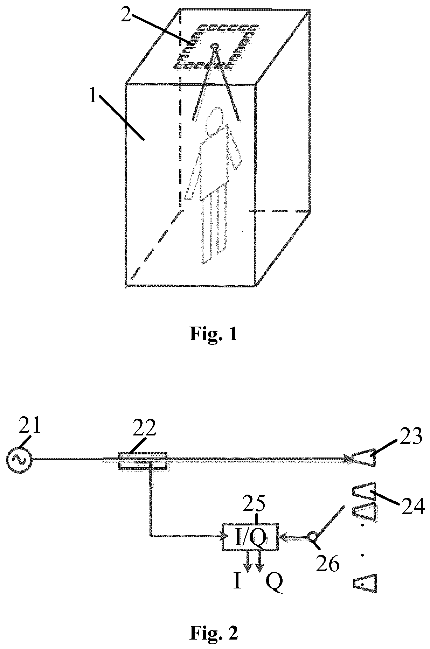

Fig. 1 is a perspective view showing a millimeter wave security check gate in accordance with one embodiment of the present disclosure. Fig. 2 is a schematic diagram showing a top millimeter wave imaging system in accordance with one exemplary embodiment of the present disclosure.

As shown in Fig. 1 and Fig. 2, a millimeter wave security check gate according to one exemplary embodiment of the present disclosure may comprise a gate body 1 and a top millimeter wave imaging system 2. The top millimeter wave imaging system 2 may comprise a millimeter wave transceiving antenna array disposed at a top of the gate body 1, wherein the millimeter wave transceiving antenna array may comprise at least one transmitting antenna unit 23 and a plurality of receiving antenna units 24. Moreover, the top millimeter wave imaging system 2 may further comprise a millimeter wave signal source 21 connected with the millimeter wave transceiving antenna array, and the millimeter wave signal source 21 may be a broadband millimeter wave signal source 21 with a ultra-low power (e.g., less than 1 mw). The millimeter wave signal source 21 may emit a millimeter wave signal through the transmitting antenna unit 23 located at the top of the gate body 1, and the millimeter wave signal may irradiate a top of an object to be detected within the gate body 1, for example, a head of a human body. The millimeter wave signal reflected by the top of the object to be detected may be received by the receiving antenna unit 24 which is also located at the top of the gate body 1, to generate millimeter wave image information. Through adding the top millimeter wave imaging system 2 at the top of the gate body 1, the millimeter wave security check gate according to exemplary embodiments of the present disclosure may be able to irradiate the top of the object to be detected, thereby enhancing a detection for concealed contrabands in the top of the object to be detected (e.g., contrabands in headscarf, hair, etc.), and achieving an all-dimensional detection.

As shown in Fig. 2, the millimeter wave security check gate according to one exemplary embodiment of the present disclosure may further comprise a beam splitter 22 and a demodulator 25. The beam splitter 22 may be configured to split the millimeter wave signal emitted by the millimeter wave signal source 21 into two millimeter wave signals: a first millimeter wave signal and a second millimeter wave signal, wherein the first millimeter wave signal (as a transmitted signal) may form a wide beam millimeter wave through the transmitting antenna unit 23 to irradiate the top of the object to be detected within the gate body 1, and the second millimeter wave signal (as a reference signal) may be inputted to the demodulator 25. Millimeter wave signals that are reflected by the top of the object to be detected may be received by the plurality of receiving antenna units 24 to form measurement signals which may be inputted to the demodulator 25. The demodulator 25 may demodulate the received measurement signals based on the reference signal to obtain a complex signal comprising target amplitude and phase information, and the real and imaginary parts of which may be I and Q, respectively, thereby imaging the top position of the object to be detected. In this embodiment, to enable the reception of the plurality of receiving antenna units 24, the top millimeter wave imaging system may further comprise a switch 26 configured to switch the plurality of transmitting antenna units 24 quickly.

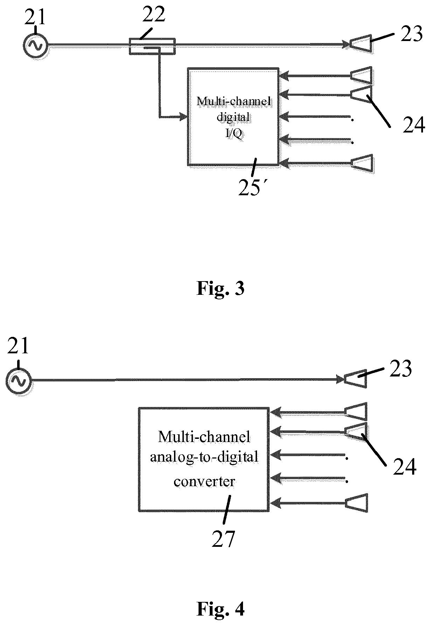

As shown in Fig. 3, in one exemplary embodiment, the demodulator 25 may be a multi-channel digital demodulator 25', and the multi-channel digital demodulator 25' may simultaneously receive the second millimeter wave signals that are reflected back by the top of the object to be detected and received by the plurality of receiving antenna units 24 as the measurement signals, and then demodulate the measurement signals. In this manner, multiple I/Q signals may be obtained by digital signal processing methods after a A/D conversion of the measurement signals and reference signal in the multi-channel digital demodulator 25', that is, amplitudes and phases of the second millimeter wave signals that are reflected by the top of the object to be detected may be obtained by a coherent measurement, thereby achieving a high resolution imaging of the top position of the object to be detected.

In addition, the top millimeter wave imaging system may also employ a non-coherent imaging method. As shown in Fig. 4, in one exemplary embodiment, a multi-channel analog-to-digital converter 27 may be further comprised. The millimeter wave signal emitted by the millimeter wave signal source 21 (as a transmitted signal) may form a wide beam millimeter wave through the transmitting antenna unit 23 to irradiate the top of the object to be detected, and the multi-channel analog-to-digital converter 27 may simultaneously receive millimeter wave signals that are reflected by the top of the object to be detected and received by the plurality of receiving antenna units 24, and perform an analog-to-digital conversion to obtain strength information of the millimeter wave signals. In this embodiment, the plurality of receiving antenna units 24 may be arranged throughout the whole receiving plane, and these receiving antenna units 24 may simultaneously receive millimeter wave signals that are reflected by the object to be detected.

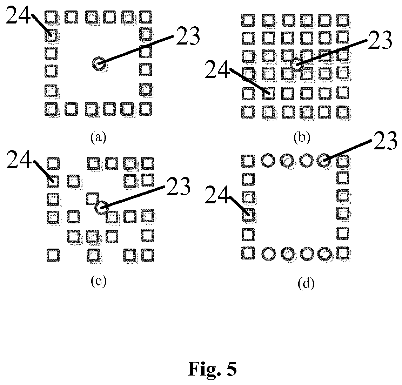

Fig. 5 shows several arrangements of the transmitting antenna units 23 and the receiving antenna units 24 of the top millimeter wave imaging system 2. In Fig. 5, "○" may represent the transmitting antenna units 23 and "□" may represent the receiving antenna units 24.

As shown in Fig. 5(a), in one exemplary embodiment, the transmitting antenna unit 23 may comprise a transmitting antenna unit, and the transmitting antenna unit 23 may be at a center of a rectangular imaging visual field of the top millimeter wave imaging system 2. The plurality of receiving antenna units 24 may be arranged along an edge of the rectangular imaging visual field.

As shown in Fig. 5(b), in one exemplary embodiment, the transmitting antenna unit 23 may comprise a transmitting antenna unit, and the transmitting antenna unit 23 may be at a center of a rectangular imaging visual field of the top millimeter wave imaging system 2. The plurality of receiving antenna units 24 may be arranged in a two-dimensional grid within the rectangular imaging visual field, that is, the plurality of receiving antenna units 24 may be arranged throughout the whole imaging visual field.

As shown in Fig. 5(c), in one exemplary embodiment, the transmitting antenna unit 23 may comprise a transmitting antenna unit, and the transmitting antenna unit 23 may be at a center of a rectangular imaging visual field of the top millimeter wave imaging system 2. The plurality of receiving antenna units 24 may be arranged randomly within the imaging visual field.

As shown in Fig. 5(d), in one exemplary embodiment, the transmitting antenna units 23 may comprise a plurality of transmitting antenna units, and the top millimeter wave imaging system 2 may further comprise a switch configured to switch the plurality of transmitting antenna units 23 such that only one of the plurality of transmitting antenna units 23 may emit a millimeter wave at any time. In such case, the plurality of transmitting antenna units 23 may be arranged along two parallel edges of a rectangular imaging visual field of the top millimeter wave imaging system 2, and the plurality of receiving antenna units 24 may be arranged along another two parallel edges of the rectangular imaging visual field of the top millimeter wave imaging system 2, such that the transmitting and receiving are correlated respectively.

Through disposing a top millimeter wave imaging system at the top of the gate body, the millimeter wave security check gate according to the above various embodiments of the present disclosure may be able to increase an irradiation angle of view on the top of the object to be detected, thereby enhancing a detection for concealed contrabands in the top of the object to be detected, and achieving an all-dimensional detection.

It will be understood by those skilled in the art that the embodiments described above are exemplary and may be modified, and the structures described in the various embodiments may be combined without any conflict in structure or principle.

After the preferred embodiments of the present disclosure have been described in detail, those skilled in the art will understand that various changes and modifications may be made without departing from the protection scope of the appended claims, and that the present disclosure is not limited to the exemplary embodiments described herein.

## Claims

1. A millimeter wave security check gate, **characterized by** comprising:
a gate body (1); and
a top millimeter wave imaging system (2), comprising:
a millimeter wave transceiving antenna array disposed at a top of the gate body (1), wherein the millimeter wave transceiving antenna array comprises at least one transmitting antenna unit (23) and a plurality of receiving antenna units (24); and
a millimeter wave signal source (21) connected with the millimeter wave transceiving antenna array.

2. The millimeter wave security check gate of claim 1, wherein the top millimeter wave imaging system (2) further comprises:
a beam splitter (22) configured to split a millimeter wave signal emitted by the millimeter wave signal source (21) into a first millimeter wave signal and a second millimeter wave signal, wherein the first millimeter wave signal irradiates a top of an object to be detected within the gate body (1) through the at least one transmitting antenna unit (23); and
a demodulator (25) configured to receive the second millimeter wave signal from the beam splitter (22) as a reference signal and receive second millimeter wave signals that are reflected by the top of the object to be detected and received by the plurality of receiving antenna units (24) as measurement signals, and then demodulate the measurement signals.

3. The millimeter wave security check gate of claim 2, wherein the demodulator (25) is a multi-channel demodulator (25'), and the multi-channel demodulator (25') simultaneously receives the second millimeter wave signals that are reflected by the top of the object to be detected and received by the plurality of receiving antenna units (24) as the measurement signals, and then demodulates the measurement signals.

4. The millimeter wave security check gate of claim 1, wherein the millimeter wave signal source (21) emits a millimeter wave signal through the at least one transmitting antenna unit (23), and the millimeter wave signal is to irradiate a top of an object to be detected within the gate body (1); and the top millimeter wave imaging system (2) further comprises a multi-channel analog-to-digital converter (27) to simultaneously receive millimeter wave signals that are reflected by the top of the object to be detected and received by the plurality of receiving antenna units (24), and to perform an analog-to-digital conversion to obtain strength information of the millimeter wave signals.

5. The millimeter wave security check gate of any of claims 1-4, wherein a number of the at least one transmitting antenna unit (23) is one, and the transmitting antenna unit (23) is at a center of a rectangular imaging visual field of the top millimeter wave imaging system (2).

6. The millimeter wave security check gate of claim 5, wherein the plurality of receiving antenna units (24) are arranged along an edge of the rectangular imaging visual field.

7. The millimeter wave security check gate of claim 5, wherein the plurality of receiving antenna units (24) are arranged in a two-dimensional grid within the rectangular imaging visual field.

8. The millimeter wave security check gate of claim 5, wherein the plurality of receiving antenna units (24) are arranged randomly within the rectangular imaging visual field.

9. The millimeter wave security check gate of any of claims 1-4, wherein a number of the at least one transmitting antenna unit (23) is more than one, and the top millimeter wave imaging system (2) further comprises a switch (26) configured to switch the plurality of transmitting antenna units (23) such that only one of the plurality of transmitting antenna units (23) emits a millimeter wave at any time.

10. The millimeter wave security check gate of claim 9, wherein the plurality of transmitting antenna units (23) are arranged along two parallel edges of a rectangular imaging visual field of the top millimeter wave imaging system (2), and the plurality of receiving antenna units (24) are arranged along another two parallel edges of the rectangular imaging visual field of the top millimeter wave imaging system (2).
